(19) Europäisches Patentamt / European Patent Office / Office européen des brevets

(11) **EP 4 266 569 A1**

(12) **EUROPEAN PATENT APPLICATION**
published in accordance with Art. 153(4) EPC

(43) Date of publication:
**25.10.2023 Bulletin 2023/43**

(21) Application number: **22814842.5**

(22) Date of filing: **01.04.2022**

(51) International Patent Classification (IPC):
**H02P 6/28** (2016.01)     **F24F 11/86** (2018.01)

(86) International application number:
**PCT/CN2022/084720**

(87) International publication number:
**WO 2022/252795 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 CN 202110608990**

(71) Applicants:
• **Qingdao Haier Air Conditioner General Corp., Ltd.**
  **Qingdao, Shandong 266101 (CN)**
• **Qingdao Haier Air-Conditioning Electronic Co., Ltd**
  **Qingdao, Shandong 266101 (CN)**

• **Haier Smart Home Co., Ltd.**
  **Qingdao, Shandong 266101 (CN)**

(72) Inventors:
• **GENG, Baohan**
  **Qingdao, Shandong 266101 (CN)**
• **MORI, Masahito**
  **Qingdao, Shandong 266101 (CN)**
• **WANG, Pengpeng**
  **Qingdao, Shandong 266101 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR DRIVING ELECTRIC MOTOR, AND CONTROL DEVICE**

(57)     Provided is a method for driving motor. The method includes: obtaining real-time load information of an air conditioner, and determining a current input current value of a motor as a first current value; determining a theoretical excitation current value and a preset value corresponding to the real-time load information; compensating the preset value to obtain a compensated adjustment parameter value, determining an actual excitation current value according to the compensated adjustment parameter value and a theoretical excitation current value, and determining a current value input by the motor at the moment as a second current value; if the input current difference determined between the second current value and the first current value is within the set range, the excitation current of the motor is controlled to be the actual excitation current value.

Fig. 1

# Description

## CROSS-REFERENCE TO RELATED APPLICATIONS

The application is based upon and claims priority to Chinese Patent Application No. 202110608990.7, filed June 1, 2021, the entire contents of which are incorporated herein by reference.

## TECHNICAL FIELD

The present disclosure relates to the field of the compressor of the inverter air conditioner, for example, relates to a method and a device for driving motor, and a controlling device.

## BACKGROUND

In an inverter air conditioner, a compressor is a device with a largest power consumption, that is, the device with the largest power consumption. In order to save energy, a driving efficiency of the compressor can be improved. For example, the driving efficiency of the compressor can be increased by increasing the operating efficiency of the motor employed in the compressor.

At present, a compressor of a frequency conversion air conditioner mostly adopts an embedded permanent magnet synchronous motor, because the embedded permanent magnet synchronous motor has higher efficiency, so that the working efficiency of the compressor can be improved. High efficiency control of an embedded permanent magnet synchronous motor is achieved when the field current in the motor is minimized and the torque is maximized at the same time. In general, for such a motor, the field current $i_d$ can be obtained according to the following formula:

$$i_d = -\frac{\Psi_a}{2\left(L_d - L_q\right)} - \sqrt{\frac{\Psi_a{}^2}{4\left(L_d - L_q\right)^2} + i_q^2}$$

In the formula, $L_d, L_q$ and $\Psi_a$ represent the parameters of a motor characteristics, and $i_q$ represents a current of a torque part.

In a case of a certain load, because the formula is obtained under ideal conditions, the actual characteristic parameters of the motor exist errors, and a test of motor parameters also exist errors, so a value of $i_d$ calculated by the above formula is not necessarily the real minimum value. In order to compensate for these errors, adjustment parameters under different loads can be memorized and can be recalled during calculation.

In the practice of the embodiment of the present disclosure, it is found that at least the following problems of the related technology:

For each different load, the corresponding adjustment parameters should be memorized. The adjustment operation is huge and the amount of memory is large.

## SUMMARY

In order to have a basic understanding of some aspects of the disclosed embodiments a brief summary is given below. The summary is not intended to be a general comment or to identify crucial/essential constituent elements or to describe the protection scope of these embodiments but rather to serve as a preface to the detailed description that follows.

The embodiment of the present disclosure provides a method and a device for driving motor, and a controlling device, in order to solve problems that: corresponding adjustment parameters obtaining a first actual temperature of the inner coil need to be memorized for each different load, which easily leads to a huge adjustment operation and a large amount of memory.

In some embodiments, the method for driving motor includes: obtaining real-time load information of an air conditioner, and determining a current input current value of a motor as a first current value; determining a theoretical excitation current value and an adjustment parameter value corresponding to the real-time load information, wherein the adjustment parameter value is a preset value; compensating a preset value to obtain a first compensated adjustment parameter value, determining a first actual excitation current value according to the first compensated adjustment parameter value and a theoretical excitation current value, and determining a current value inputting to the motor at this moment as a second current value; and, determining a first input current difference according to the second current value and the first current value, and controlling the excitation current of the motor to be a first actual excitation current value in a case where the first input current difference is in a first set range.

Optionally, if the first input current difference exceeds a first set range, the method for driving motor further includes: if the first current value is higher than the second current value, compensating the first compensated adjustment parameter value to obtain a second compensated adjustment parameter value; determining a second actual excitation current value according to the second compensated adjustment parameter value and the theoretical excitation current value, and determining a current value inputting to the motor at this moment as a third current value; and, determining a second input current difference according to the third current value and the first current value, and controlling the excitation current value of the motor to be a second actual excitation current value in a case where the second input current difference is within the first set range.

Optionally, determining the preset value as follow : obtaining a load information base, wherein the load information base comprises a plurality of preset load information of an air conditioner and preset adjustment parameter values corresponding to each preset load information; and, if the real-time load information is not matched in the load information base, determining a preset adjustment parameter value corresponding to preset load information closest to the real-time load information as a preset value.

Optionally, the method for driving motor further includes: obtaining a load information base, wherein the load information base comprises a plurality of preset load information of an air conditioner and preset excitation current values corresponding to each preset load information; if the real-time load information is matched in the load information base, obtaining a preset excitation current value associated with the real-time load information as a third actual excitation current value, and controlling the excitation current value of the motor as the third actual excitation current value.

Optionally, the determining the first actual excitation current value to the first compensated adjusted parameter value and the theoretical excitation current value includes: obtaining a first product of the first compensated adjusted parameter value and the theoretical excitation current value, and determining the first product as the first actual excitation current value

Optionally, the determining the first actual excitation current value according to the first compensated adjusted parameter value and the theoretical excitation current value, includes: obtaining a second product of an absolute value of the theoretical excitation current and the first compensated adjusted parameter value, and determining the sum of the second product and the theoretical excitation current as the first actual excitation current value.

Optionally, determining the first actual excitation current value according to the first compensated adjusted parameter value and the theoretical excitation current value includes: obtaining a sum of the first compensated adjusted parameter value and the theoretical excitation current value, and determining the sum as the first actual excitation current value.

Optionally, the preset load informations include one or more of intermediate cooling, intermediate heating, rated cooling, rated heating or maximum heating.

In some embodiments, the device for driving motor includes a processor and a memory storing program instructions, wherein the processor is configured to execute the mentioned controlling method for a driving motor in a case where executing the program instructions.

In some embodiments, the controlling device includes the mentioned device for a driving motor.

The method and the device for driving motor, and the controlling device provided by the embodiment of the disclosure can have the following technical advantages: a

The method for driving motor includes: obtaining a real-time load information of an air conditioner, and determining a current input current value of a motor as a first current value; determining a theoretical excitation current value and an adjustment parameter value corresponding to the real-time load information, wherein the adjustment parameter value is a preset value; compensating a preset value to obtain a first compensated adjustment parameter value, determining a first actual excitation current value according to the first compensated adjustment parameter value and a theoretical excitation current value, and determining a current value inputting to the motor at this moment as a second current value; and, determining a first input current difference according to the second current value and the first current value, and controlling the excitation current of the motor to be a first actual excitation current value in case where the first input current difference is in a first set range. According to the method for driving motor, a large amount of load information and adjustment parameter values corresponding to the load information may not be memorized, and a theoretical excitation current value can be compensated more accurately, and the input current of the motor is minimized in a case that the optimal excitation current value. That is to say, the maximum torque can be obtained with the minimum input power, and the efficiency of the motor can be improved in the case of minimum energy consumption.

The above general description and the description below are exemplary and explanatory only and are not intended to limit the present disclosure.

## BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, wherein:

Fig. 1 is a flow chart of a method for driving motor according to an exemplary embodiment.
Fig. 2 is a flow chart of a method for driving motor according to another exemplary embodiment.
Fig. 3 is a flow chart of method for driving motor according to another exemplary embodiment.
Fig. 4 is a flow chart of method for driving motor according to another exemplary embodiment.
Fig. 5 is a schematic diagram of a device for driving motor according to an exemplary embodiment.
Fig. 6 is a schematic diagram of another device for driving motor according to an exemplary embodiment.

## DETAILED DESCRIPTION

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "include" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

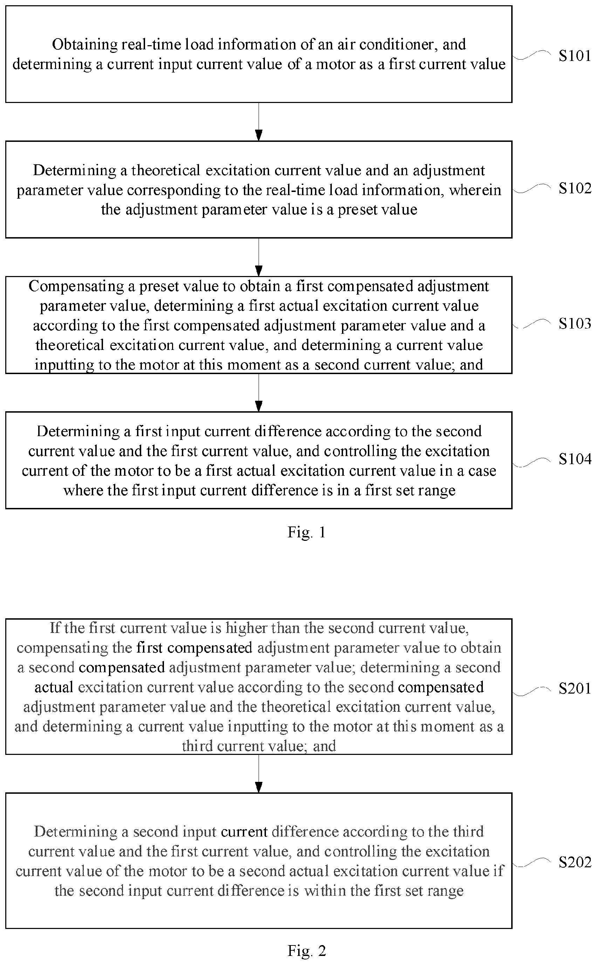

As shown in Fig. 1, the method for driving motor, includes:

> S101, [0041] obtaining real-time load information of an air conditioner, and determining a current input current value of a motor as a first current value.
> S102, determining a theoretical excitation current value and an adjustment parameter value corresponding to the real-time load information, wherein the adjustment parameter value is a preset value.
> S103, compensating a preset value to obtain a first compensated adjustment parameter value, determining a first actual excitation current value according to the first compensated adjustment parameter value and a theoretical excitation current value, and determining a current value inputting to the motor at this moment as a second current value.
> S104, determining a first input current difference according to the second current value and the first current value, and controlling the excitation current of the motor to be a first actual excitation current value in a case where the first input current difference is in a first set range.

When the motor starts to operate, obtaining a real-time load information of the air conditioner and a first current value, wherein the first current value is a current input current value of the motor detected by a current detection element. The load information at this moment can be the cooling or heating mode of the air conditioner, and a temperature information set by the air conditioner.

The theoretical excitation current value corresponding to the real-time load information is determined by the following formula:

$$i_d = -\frac{\Psi_a}{2\left(L_d - L_q\right)} - \sqrt{\frac{{\Psi_a}^2}{4\left(L_d - L_q\right)^2} + i_q^2}$$

Additionally, an adjustment parameter value corresponding to the real-time load information may also be determined, where the adjustment parameter value may be a preset value. As an example, the preset value may be a value corresponding to the real-time load determined through simulation or experiment, or may be a value set autonomously. For example, the preset value may be 1.

As an example, the excitation current value satisfying the requirement may be determined by compensating the preset value. Wherein, the mode of compensation may be one value added, one value subtracted, one value multiplied or one value divided. Recording the adjustment parameter value after the compensation as a first compensated adjustment parameter value, and according to the first compensated adjustment parameters and the theoretical excitation current value, determining the first actual excitation current value.

The first actual excitation current value is determined as follows: the first compensated adjustment parameter value can be multiplied by the theoretical excitation current value to obtain a first product, and the first product is determined as the first actual excitation current value. This adjustment mode is the most basic adjustment mode. Alternatively, a second product may be obtained using the absolute value of the theoretical excitation current and the first compensated adjusted parameter value; and a sum of the second product and the theoretical excitation current is determined as the first actual excitation current value. The first actual excitation current value obtained by this mode may exceed the sign of the original excitation current value and obtain a maximum adjustment range. Alternatively, a sum of the first compensated adjusted parameter value and the theoretical excitation current value may be determined as the first actual excitation current value. This compensation method may carry out compensation as long as data is added or subtracted, thereby saving the calculation resources of the compensation means.

After obtaining the first actual excitation current value, the motor is controlled to operate under the first actual excitation current value. Detecting a current input current value by using a current detection element, and marking the current input current value as a second current value. And making a difference between the second current value and the first current value to obtain a first input current difference. If the first input current difference is within the first set range, it can be considered that the adjustment parameter value at this moment is an optimal value, that is, the excitation current value at this time is the optimal value. Under the condition of operating with the optimal excitation current, the input current of the motor is the minimum value, and the efficient control with the maximum torque can be produced. According to the method for driving motor, a large amount of load information and adjustment parameter values corresponding to the load information may not be memorized, and a theoretical excitation current value can be compensated more accurately, and the input current of the motor is minimized in a case that the optimal excitation current value. That is to say, in the case of minimum input power, the maximum torque can be obtained, and the efficiency of the motor can be improved in the case of minimum energy consumption.

In a case where the first input current difference exceeds the first set range, the embodiment of the present disclosure may further perform compensation processing to obtain an excitation current value which meets the requirements. As shown in Fig. 2, the method for driving motor further includes:

> S201, if the first current value is higher than the second current value, compensating the first compensated adjustment parameter value to obtain a second compensated adjustment parameter value; determining a second actual excitation current value according to the second compensated adjustment parameter value and the theoretical excitation current value, and determining a current value inputting to the motor at this moment as a third current value.
> S202, determining a second input current difference according to the third current value and the first current value, and controlling the excitation current value of the motor to be a second actual excitation current value in a case where the second input current difference is within the first set range.

When the first input current difference is not within the first set range, it indicates that the excitation current value obtained after the first compensation is not the optimal value, and thus the excitation current value should be compensated again. If the first current value is higher than the second current value and the first input current difference is not within the first set range, it indicates that the second current value should be adjusted towards the first current value when adjusting again. That is, one numerical value is added to the adjustment parameter value after the first compensation to obtain the adjustment parameter value after the second compensation.

If the first current value is lower than the second current value and the first input current difference is not within the first set range, it indicates that the second current value should be adjusted towards the first current value when adjusting again. That is, one numerical value is subtracted from the adjustment parameter value after the first compensation to obtain the adjustment parameter value after the second compensation.

The second actual excitation current value is determined according to the second compensated adjusted parameter value and the theoretical excitation current value. The manner of determining the second actual excitation current value is referred to the manner of obtaining the first actual excitation current in step S102. Additionally, when the motor is controlled to operate at the second actual excitation current value, the current value currently inputting to the motor can also be detected by the current detection element, and the detected current value currently inputting to the motor is recorded as a third current value.

Determining a second input current difference according to the difference between the third current value and the first current value. If the second input current difference is within the first set range, the excitation current value of the motor is controlled to be the second actual excitation current value.

If the second input current difference is not within the first set range, S201 and S202 are repeated until the second input current difference is within the first set range, and the excitation current value of the motor is controlled to be a nth actual excitation current value. According to the method for driving motor, a large amount of load information and adjustment parameter values corresponding to the load information may not be memorized, and a theoretical excitation current value can be compensated more accurately, and the input current of the motor is minimized in a case that the optimal excitation current value. That is to say, the maximum torque can be obtained with the minimum input power, and the efficiency of the motor can be improved in the case of minimum energy consumption.

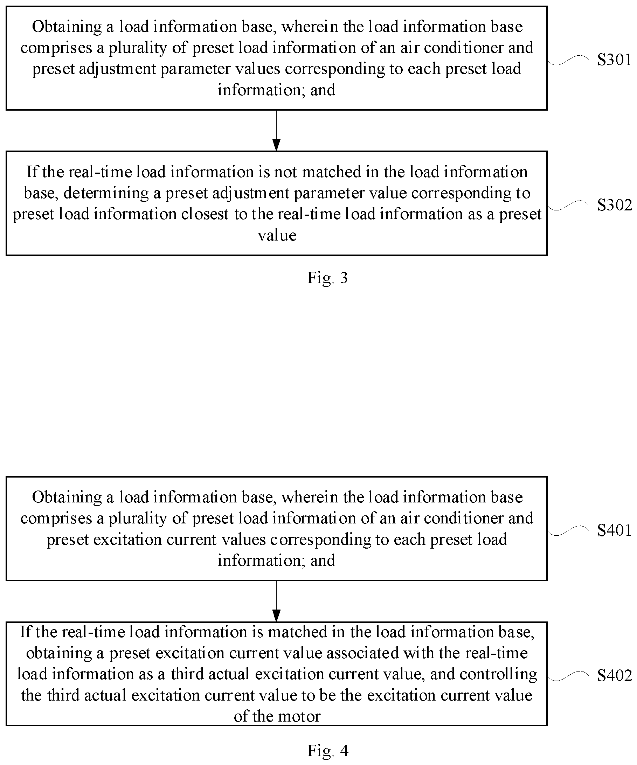

As shown in fig. 3, the preset value may also be determined as follow:

> S301, obtaining a load information base, wherein the load information base comprises a plurality of preset load information of an air conditioner and preset adjustment parameter values corresponding to each preset load information.
> S302, if the real-time load information is not matched in the load information base, determining a preset adjustment parameter value corresponding to preset load information closest to the real-time load information as a preset value.

Obtaining a load information base, which stores a plurality of preset load information of the air conditioner and preset adjustment parameter values corresponding to each preset load information. The preset adjustment parameter values can be obtained through a plurality of experiments. Wherein a plurality of preset load information includes one or more conditions of intermediate cooling, intermediate heating, rated cooling, rated heating, or maximum heating.

If the real-time load information is not matched in the load information base, determining a preset adjustment parameter value corresponding to a preset load information closest to the real-time load information is determined as a preset value, wherein the real-time loading information includes intermediate cooling, intermediate heating, rated value cooling, rated value heating and maximum heating.

As shown in fig. 4, the method for driving motor further includes:

S401, obtaining a load information base, wherein the load information base comprises a plurality of preset load information of an air conditioner and preset excitation current values corresponding to each preset load information.

S402, if the real-time load information is matched in the load information base, obtaining a preset excitation current value associated with the real-time load information as a third actual excitation current value, and controlling the excitation current value of the motor as the third actual excitation current value.

Obtaining a load information base, wherein the load information base includes a plurality of preset load information of the air conditioner, wherein the preset load information includes one or more conditions of intermediate cooling, intermediate heating, rated cooling, rated heating or maximum heating. And the load information base further includes third excitation current values corresponding to each preset load information. The third excitation current values is empirical value obtained through simulation and calculation.

Detecting the real-time load information and judging whether the real-time load information can be matched in the load information base. If the real-time load information is matched in the load information base, a third actual excitation current value associated with the real-time load information is obtained, and controlling the third actual excitation current value to be the excitation current value of the motor. According to the scheme, it is helpful to improve the response speed, and can make it easy to achieve the optimal adjustment operation with high efficiency control, thereby saving the operation time. If not matched, executing the steps S 101 to S 103 to implement.

Optionally, the preset load information includes one or more of intermediate cooling, intermediate heating, rated cooling, rated heating, or maximum heating.

These load informations can be all memorized, or only a few appropriated ones selected be memorized. In view of the performance requirements, if more attention is paid to the actual operation after the stability control, the intermediate cooling or heating which has a great impact on its state can be selected for memory. And if more attention is paid to the rated capacity, the rated cooling and/or rated thermal conditions can be selected for memory.

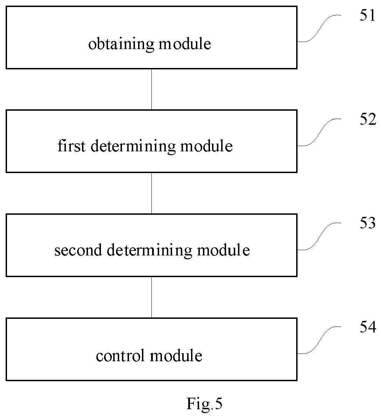

As shown in fig. 5, the device for driving motor includes an obtaining module 51, a first determining module 52, a second determining module 53, and a control module. An obtaining module 51 is configured to obtain real-time load information of the air conditioner, and determine a current input current value of the motor as a first current value. A second determining module 52 is configured to determine a theoretical excitation current value corresponding to the real-time load information and an adjustment parameter value, wherein the adjustment parameter value is a preset value. A second determining module 53 is configured to compensate a preset value to obtain a first compensated adjustment parameter value, determining a first actual excitation current value according to the first compensated adjustment parameter value and a theoretical excitation current value, and determining a current value inputting to the motor at this moment as a second current value. A control module 54 is configured to determine a first input current difference according to the second current value and the first current value, and control the excitation current of the motor to be a first actual excitation current value if the first input current difference is within a first set range.

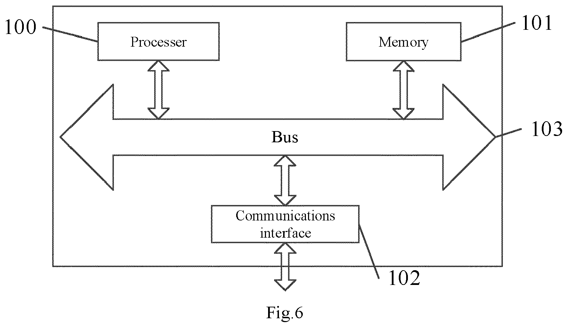

As shown in Fig. 6, the embodiment of the present disclosure provides a device for driving motor, which includes a processor 100 and a memory 101. Optionally the device may also include a communication interface 102 and a bus 103. The processor 100, the communication interface 102, and the memory 101 are communicated with each other through the bus 103. The communication interface 102 may be configured for information transmission. The processor 100 may invoke logic instructions in the memory 101 to execute the method for a driving motor in the above-described embodiment.

Further, the logic instructions in the memory 101 described above may be realized in the form of software functional units and may be stored in a computer-readable storage medium when sold or used as a separate product.

As a computer-readable storage medium, the memory 101 may be configured to store software programs, and computer executable programs, such as program instructions/modules corresponding to the methods in embodiments of the present disclosure. The processor 100 executes the function application and data processing by running the program instructions/modules stored in the memory 101 that is to implement the method for driving motor in the above-described embodiment.

The memory 101 may include a stored program area and a stored data area wherein the stored program area may store an operating system and an application program required for at least one function. The storage data area may store data created according to the use of the terminal device. In addition, the memory 101 may include a high-speed random access memory and may also include a non-volatile memory.

The embodiment of the present disclosure provides a control device including the device for a driving motor.

The embodiments of the present disclosure provide a computer-readable storage medium storing computer-executable instructions configured to execute the above-described method for a driving motor.

The embodiments of the present disclosure provide a computer program product including a computer program stored on a computer-readable storage medium, the computer program including program instructions that, when executed by a computer, cause the computer to execute the above-described method for a driving motor.

The computer-readable storage medium may be a transient computer-readable storage medium or a non-transient computer-readable storage medium.

The technical proposal of the embodiment of the present disclosure can be embodied in the form of a software product, The computer software product is stored in a storage medium and includes one or more instructions for causing a computer device (which may be a personal computer, server, or network device, etc.) to perform all or part of the steps of the method described in the embodiment of the present disclosure. The mentioned storage medium may be a non-transient storage medium, including a U disk, a mobile hard disk, a Read-Only Memory (ROM), a Random Access Memory (RAM), a magnetic disk or an optical disk, and other media capable of storing program codes or maybe a transient storage medium.

The above description and drawings sufficiently illustrate embodiments of the present disclosure to enable to practice by those skilled in the art. Other embodiments may include structural logical electrical procedural and other modifications. Embodiments represent only possible variations. Unless explicitly required, individual parts and functions are optional, and the order of operation can vary. Portions and features of some embodiments may be included in or in place of portions and features of other embodiments. Furthermore, the terms used in the present disclosure are used only to describe embodiments and are not used to limit the claims. As used in the embodiments and the description of the claims, the singular forms of "a", "an" and "the" are intended to include the plural forms as well, unless the context clearly indicates. Similarly, the term "and/or" as used in this application means encompassing one or more associated lists of any and all possible combinations. Additionally, when used in this application, the term "comprise" and its variants "comprises" and/or "comprising", etc. refer to the presence of stated features, totals, steps, operations, elements, and/or components, but do not exclude the presence or addition of one or more other features, totals, steps, operations, elements, components, and/or groupings of these. In the absence of further limitations, an element defined by the phrase "includes an ..." does not preclude the existence of another identical element in the process, method, or device in which the element is included. Herein each embodiment may be highlighted as being different from the other embodiments and the same similar parts between the various embodiments may be referred to with respect to each other. For the method, product, etc. disclosed by the embodiment, if it corresponds to the method portion disclosed by the embodiment, reference can be made to the description of the method portion where relevant.

Those skilled in the art will appreciate that the various example units and algorithm steps described in connection with the embodiments disclosed herein can be implemented in electronic hardware or a combination of computer software and electronic hardware. Whether these functions are performed in hardware or software can depend on the specific application and design constraints of the technical solution. The skilled artisan may use different methods for each particular application to implement the described functionality but such implementation should not be considered outside the scope of the disclosed embodiments. It will be apparent to the skilled person that for convenience and conciseness of description, the specific operating processes of the above-described systems, devices, and units may be referred to the corresponding processes in the mentioned method embodiments and will not be repeated herein.

In the embodiments disclosed herein, the disclosed methods, and products (including but not limited to devices, devices, etc.) may be implemented in other ways. For example, the above-described embodiment of the device is only schematic, for example, the division of the unit may be only a logical function division, and in practice, there may be another division mode, for example, multiple units or components may be combined or integrated into another system, or some features may be ignored or not performed. In addition, the coupling or direct coupling or communication connection between each other shown or discussed may be indirect coupling or communication connection through some interface, device, or unit, and may be electrical, mechanical, or another form. The elements illustrated as separate elements may or may not be physically separated, and the elements displayed as elements may or may not be physical elements, i.e. may be located in one place or may be distributed over a plurality of network elements. Some or all of the units can be selected according to actual needs to realize the embodiment. In addition, each functional unit in the embodiment of the present disclosure may be integrated into one processing unit, each unit may exist physically alone, or two or more units may be integrated into one unit.

The flowcharts and block diagrams in the accompanying drawings illustrate the architecture functionality and operation of possible implementations of systems methods and computer program products according to embodiments of the present disclosure. In this regard, each block in a flow chart or block diagram may represent a module, program segment, or part of code containing one or more executable instructions for performing a specified logical function. In some alternative implementations, the functions indicated in the boxes may also occur in a different order than those indicated in the drawings. For example, two successive boxes can actually be executed substantially in parallel, or they can sometimes be executed in reverse order, depending on the functionality involved. In the description corresponding to the flowcharts and block diagrams in the drawings, the operations or steps corresponding to different blocks may also occur in a different order than that disclosed in the description, and sometimes there is no specific order between the different operations or steps. For example, two successive operations or steps can actually be performed substantially in parallel, or they can sometimes be performed in reverse order, depending on the functionality involved. Each block in the block diagram and/or flow chart, and a combination of the blocks in the block diagram and/or flow chart, may be implemented in a dedicated hardware-based system that performs a specified function or action or may be implemented in a combination of dedicated hardware and computer instructions.

**Claims**

1. A method for driving motor, comprising:

   obtaining real-time load information of an air conditioner, and determining a current input current value of a motor as a first current value; determining a theoretical excitation current value and an adjustment parameter value corresponding to the real-time load information, wherein the adjustment parameter value is a preset value; compensating a preset value to obtain a first compensated adjustment parameter value, determining a first actual excitation current value according to the first compensated adjustment parameter value and a theoretical excitation current value, and determining a current value inputting to the motor at this moment as a second current value; and, determining a first input current difference according to the second current value and the first current value, and controlling the excitation current of the motor to be a first actual excitation current value in a case where the first input current difference is in a first set range.

2. The method according to claim 1, wherein if the first input current difference exceeds a first set range, the method further comprising:

   if the first current value is higher than the second current value, compensating the first compensated adjustment parameter value to obtain a second compensated adjustment parameter value; determining a second actual excitation current value according to the second compensated adjustment parameter value and the theoretical excitation current value, and determining a current value inputting to the motor at this moment as a third current value; and, determining a second input current difference according to the third current value and the first current value, and controlling the excitation current value of the motor to be a second actual excitation current value in a case where the second input current difference is within the first set range.

3. The method according to claim 1, wherein the preset value is determined as follow:

   obtaining a load information base, wherein the load information base comprises a plurality of preset load information of an air conditioner and preset adjustment parameter values corresponding to each preset load information; and, if the real-time load information is not matched in the load information base, determining a preset adjustment parameter value corresponding to preset load information closest to the real-time load information as a preset value.

4. The method according to claim 1, further comprising:

   obtaining a load information base, wherein the load information base comprises a plurality of preset load information of an air conditioner and preset excitation current values corresponding to each preset load information; and, if the real-time load information is matched in the load information base, obtaining a preset excitation current value associated with the real-time load information as a third actual excitation current value, and controlling the third actual excitation current value to be the excitation current value of the motor.

5. The method according to claim 1, wherein the determining the first actual excitation current value according to the first compensated adjusted parameter value and the theoretical excitation current value, comprises:
   obtaining a first product of the first compensated adjusted parameter value and the theoretical excitation current value, and determining the first product as the first actual excitation current value.

6. The method according to claim 1, wherein the determining the first actual excitation current value according to the first compensated adjusted parameter value and the theoretical excitation current value, comprises:

obtaining a second product of an absolute value of the theoretical excitation current and the first compensated adjusted parameter value, and determining the sum of the second product and the theoretical excitation current as the first actual excitation current value.

7. The method according to claim 1, wherein the determining the first actual excitation current value according to the first compensated adjusted parameter value and the theoretical excitation current value, comprises:

obtaining a sum of the first compensated adjusted parameter value and the theoretical excitation current value, and determining the sum as the first actual excitation current value.

8. The method according to any one of claims 1 to 7, wherein the preset load informations comprises one or more of intermediate cooling, intermediate heating, rated cooling, rated heating or maximum heating.

9. A device for driving motor, comprising a processor and a memory storing program instructions, wherein the processor is configured to execute the method driving for motor according to any one of claims 1 to 8 when executing the program instructions.

10. A control device, comprising a device for driving motor according to claim 9.

Obtaining real-time load information of an air conditioner, and determining a current input current value of a motor as a first current value — S101

Determining a theoretical excitation current value and an adjustment parameter value corresponding to the real-time load information, wherein the adjustment parameter value is a preset value — S102

Compensating a preset value to obtain a first compensated adjustment parameter value, determining a first actual excitation current value according to the first compensated adjustment parameter value and a theoretical excitation current value, and determining a current value inputting to the motor at this moment as a second current value; and — S103

Determining a first input current difference according to the second current value and the first current value, and controlling the excitation current of the motor to be a first actual excitation current value in a case where the first input current difference is in a first set range — S104

Fig. 1

If the first current value is higher than the second current value, compensating the first compensated adjustment parameter value to obtain a second compensated adjustment parameter value; determining a second actual excitation current value according to the second compensated adjustment parameter value and the theoretical excitation current value, and determining a current value inputting to the motor at this moment as a third current value; and — S201

Determining a second input current difference according to the third current value and the first current value, and controlling the excitation current value of the motor to be a second actual excitation current value if the second input current difference is within the first set range — S202

Fig. 2

Obtaining a load information base, wherein the load information base comprises a plurality of preset load information of an air conditioner and preset adjustment parameter values corresponding to each preset load information; and ⁓ S301

If the real-time load information is not matched in the load information base, determining a preset adjustment parameter value corresponding to preset load information closest to the real-time load information as a preset value ⁓ S302

Fig. 3

Obtaining a load information base, wherein the load information base comprises a plurality of preset load information of an air conditioner and preset excitation current values corresponding to each preset load information; and ⁓ S401

If the real-time load information is matched in the load information base, obtaining a preset excitation current value associated with the real-time load information as a third actual excitation current value, and controlling the third actual excitation current value to be the excitation current value of the motor ⁓ S402

Fig. 4

obtaining module                                    51

first determining module                            52

second determining module                           53

control module                                      54

Fig.5

Fig.6

## INTERNATIONAL SEARCH REPORT

| International application No. |
| --- |
| **PCT/CN2022/084720** |

### A.    CLASSIFICATION OF SUBJECT MATTER

H02P 6/28(2016.01)i;  F24F 11/86(2018.01)i

According to International Patent Classification (IPC) or to both national classification and IPC

### B.    FIELDS SEARCHED

Minimum documentation searched (classification system followed by classification symbols)

H02P; F24F

Documentation searched other than minimum documentation to the extent that such documents are included in the fields searched

Electronic data base consulted during the international search (name of data base and, where practicable, search terms used)

CNABS, CNTXT, SIPOABS, DWPI, USTXT, IEEE, CNKI: 空调, 压缩机, 电机, 驱动, 负载, 励磁, 直轴, d轴, 电流, 补偿, 修正, 校正, 调整, 偏差, 偏移, 差值, 实时, air conditioner, compressor , motor, drive, load, excitat, d-axis, Straight axis, current, adjust, Compensat, Correct, difference, offset, real-time, actual

### C.    DOCUMENTS CONSIDERED TO BE RELEVANT

| Category* | Citation of document, with indication, where appropriate, of the relevant passages | Relevant to claim No. |
| --- | --- | --- |
| PX | CN 113381648 A (QINGDAO HAIER AIR CONDITIONER CO., LTD. et al.) 10 September 2021 (2021-09-10)<br>entire document | 1-10 |
| A | CN 108322125 A (SHANGHAI ELECTRIC FUJI ELECTRIC TECHNOLOGY CO., LTD.) 24 July 2018 (2018-07-24)<br>entire document | 1-10 |
| A | CN 111734544 A (LIANHE AUTOMOBILE ELECTRONICS (CHONGQING) CO., LTD.) 02 October 2020 (2020-10-02)<br>entire document | 1-10 |
| A | CN 109639198 A (ZHUHAI GREE ELECTRIC APPLIANCES INC.) 16 April 2019 (2019-04-16)<br>entire document | 1-10 |
| A | JP 2003259680 A (MITSUBISHI ELECTRIC CORP.) 12 September 2003 (2003-09-12)<br>entire document | 1-10 |

☑ Further documents are listed in the continuation of Box C.      ☑ See patent family annex.

| | |
| --- | --- |
| *     Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **23 May 2022** | **09 June 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/084720** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 112039402 A (ZHUHAI GREE ELECTRIC APPLIANCES INC.) 04 December 2020 (2020-12-04)<br>      entire document | 1-10 |

**INTERNATIONAL SEARCH REPORT**
Information on patent family members

International application No.

**PCT/CN2022/084720**

| Patent document cited in search report | | | Publication date (day/month/year) | Patent family member(s) | | | Publication date (day/month/year) |
|---|---|---|---|---|---|---|---|
| CN | 113381648 | A | 10 September 2021 | None | | | |
| CN | 108322125 | A | 24 July 2018 | CN | 108322125 | B | 03 November 2020 |
| CN | 111734544 | A | 02 October 2020 | None | | | |
| CN | 109639198 | A | 16 April 2019 | None | | | |
| JP | 2003259680 | A | 12 September 2003 | JP | 3637897 | B2 | 13 April 2005 |
| CN | 112039402 | A | 04 December 2020 | None | | | |

Form PCT/ISA/210 (patent family annex) (January 2015)

**REFERENCES CITED IN THE DESCRIPTION**

**Patent documents cited in the description**

• CN 202110608990